# EUROPEAN PATENT SPECIFICATION

(11) **EP 3 726 370 B1**
(45) Date of publication and mention of the grant of the patent: **18.09.2024**
(21) Application number: 20150637.5
(22) Date of filing: 08.01.2020
(51) Int. Cl.: G06F 3/16

(54) **MULTIMEDIA PROCESSING METHOD AND ELECTRONIC SYSTEM**
MULTIMEDIAVERARBEITUNGSVERFAHREN UND ELEKTRONISCHES SYSTEM
PROCÉDÉ DE TRAITEMENT MULTIMÉDIA ET SYSTÈME ÉLECTRONIQUE

(30) Priority: 15.04.2019 TW 108113073
(43) Date of publication of application: 21.10.2020
(73) Proprietor: Acer Incorporated, New Taipei City 221 (TW)
(72) Inventor: TSENG, Gianna, New Taipei City 221 (TW); CHOU, Szu-Ting, New Taipei City 221 (TW); LIN, Shang-Yao, New Taipei City 221 (TW); HUANG, Shih-Cheng, New Taipei City 221 (TW)
(74) Representative: Straus, Alexander

(56) References cited:
- US-A1- 2013 289 971

## Description

### Field of the Invention

The present invention relates to an electronic system and a multimedia processing method capable of acquiring audio data in game and submitting audio data to a smart interpreter engine for vocal identification and neural machine translation, and thus improving the user experience.

### Background of the Invention

Patent application US2013289971A1 discloses automatic instant translation from a source language to a target language.

With development of technology and improvement of people's living standard, people are more closely connected with to computer systems. People frequently use computer systems whether they are at home or at work. Recently, computer systems play an important role in video game industry. For example, a gaming computer is designed for playing games. A good interaction between players in the same team is very important. However, the poor communication or communication difficulty may easy occur between players who using different languages, and thus resulting in poor records. Thus, the prior art has to be improved.

### Summary of the Invention

The present invention therefore provides an electronic system and a multimedia processing method capable of improving the user experience to solve the above mentioned problems.

This is achieved by an electronic system and a multimedia processing method according to the claims.

The dependent claims pertain to corresponding further developments and improvements.

### Brief Description of the Drawings

FIG. 1 is a schematic diagram illustrating an electronic system according to an embodiment of the present invention.
FIG. 2 is a schematic diagram of the smart interpreter engine shown in FIG. 1 according to a first exemplary embodiment of the invention.
FIG. 3 is a schematic diagram of the electronic system operating in a first operation mode according to a first exemplary embodiment of the invention.
FIG. 4 is a schematic diagram of the electronic system operating in a second operation mode according to a first exemplary embodiment of the invention.
FIG. 5 is a schematic diagram of the electronic system operating in a first operation mode according to a second exemplary embodiment of the invention.
FIG. 6 is a schematic diagram of the electronic system operating in a second operation mode according to a second exemplary embodiment of the invention.
FIG. 7 is a schematic diagram of the smart interpreter engine shown in FIG. 1 according to a second exemplary embodiment of the invention.
FIGs. 8-10 are schematic diagrams of the electronic system applied for an online game according to exemplary embodiments of the invention respectively.

### Detailed Description

Certain terms are used throughout the description and following claims to refer to particular components. As one skilled in the art will appreciate, hardware manufacturers may refer to a component by different names. This document does not intend to distinguish between components that differ in name but not function. In the following description and in the claims, the terms "include" and "comprise" are utilized in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

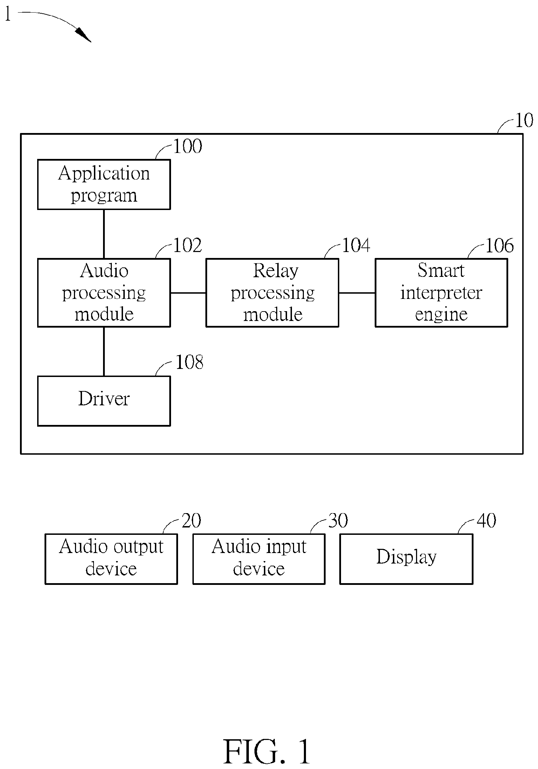

Please refer to FIG. 1, which is a schematic diagram illustrating an electronic system 1 according to an embodiment of the present invention. The electronic system 1 includes a host 10, an audio output device 20, an audio input device 30 and a display 40. The host 10 can be a desktop computer, a notebook, a mobile communication device, but not limited thereto. The host 10 includes an application program 100, an audio processing module 102, a relay processing module 104, a smart interpreter engine 106 and a driver 108.The application program 100 is stored in a storage device (not shown in figures) of the host 10 and executed by a processing circuit (not shown in figures) of the host 10. The application program 100 is configured to process audio streams. The audio streams correspond to a first language. Audio data of the audio streams may be classified into a plurality of audio (sound) categories. The audio processing module 102 can acquire at least one sound type of audio data (or speech data) from the audio streams processed by the application program 100 as audio data corresponding to a first language. The audio processing module 102 can transmit the acquired audio data corresponding to the first language to the relay processing module 104. The relay processing module 104 transmits the audio data corresponding to the first language to the smart interpreter engine 106 for processing. Moreover, the audio processing module 102 can transmit the acquired audio data corresponding to the first language to the driver 108. The driver 108 can convert the audio data acquired by the audio processing module 102 and corresponding to the first language into an analog speech signal corresponding to the first language. The driver 108 can transmit the analog speech signal corresponding to the first language to the audio output device 20. For example, the driver 108 transmits the speech data corresponding to the first language to the audio output device 20 through a transmission interface (e.g., universal serial bus (USB) interface).

The audio output device 20 is utilized for playing the analog speech signal corresponding to the first language. The audio output device 20 can be a headphone or a speaker, but not limited thereto. The audio input device 30 is utilized for acquiring speech sounds in the current environment to generate an analog speech signal corresponding to a first language. The audio input device 30 can be a microphone, but not limited thereto. The audio output device 20, the audio input device 30 and the display 40 can be connected to the host 10 through wireless or wired connections. In addition, the audio output device 20 and the audio input device 30 may be integrated onto a single structural element, such as a headset product.

The audio input device 30 can transmit the acquired analog speech signal corresponding to the first language to the driver 108. The driver 18 can convert the analog speech signal acquired by the audio input device 30 and corresponding to the first language into audio data corresponding to the first language into audio data corresponding to the first language. The driver 18 can transmit the audio data corresponding to the first language to the audio processing module 102. When receiving the audio data corresponding to the first language from the driver 108, the audio processing module 102 transmits the audio data corresponding to the first language to the relay processing module 104. When receiving the audio data corresponding to the first language from the audio processing module 102, the relay processing module 104 transmits the audio data corresponding to the smart interpreter engine 106.

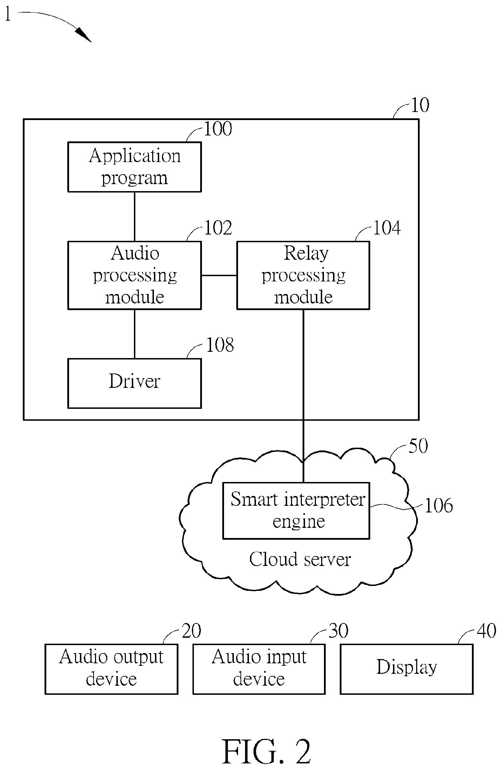

The smart interpreter engine 106 can convert the audio data corresponding to the first language into text data corresponding to a second language. The smart interpreter engine 106 can further convert the text data corresponding to the second language into audio data corresponding to the second language. The smart interpreter engine 106 can be integrated into the relay processing module 104. The smart interpreter engine 106 can also be disposed in a cloud device for processing data transmitted by the relay processing module 104. For example, please refer to FIG. 2, which is a schematic diagram illustrating the smart interpreter engine 106 according to an alternative embodiment of the present invention. As shown in FIG.2, the smart interpreter engine 106 is disposed in a cloud server 50, such that the relay processing module 104 can communicate with the smart interpreter engine 106 through a wired or wireless network for transmitting related data.

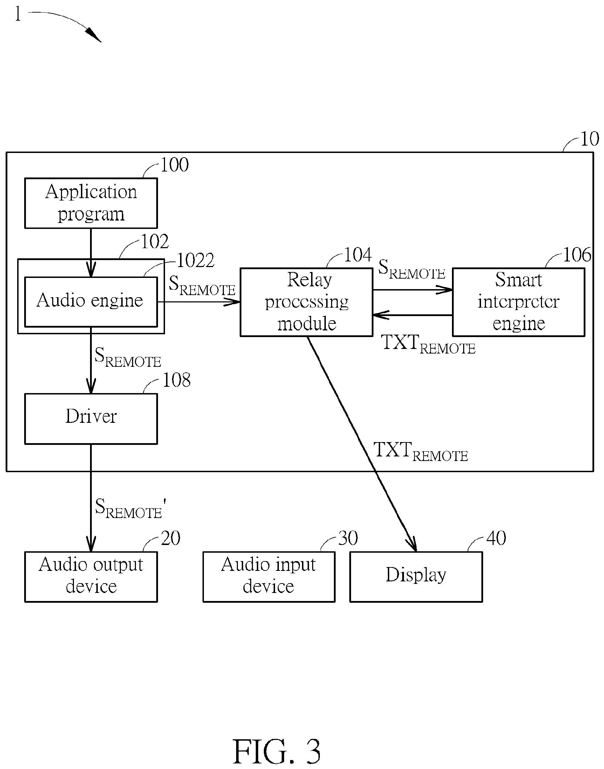

Please refer to FIG. 3. FIG. 3 is a schematic diagram of the electronic system 1 operating in a first operation mode (rendering mode) according to a first exemplary embodiment of the invention. As shown in FIG. 3, the audio processing module 102 includes an audio engine 1022. For example, the audio engine 1022 can be an audio processing object (APO). In the first operation mode (rendering mode), the audio engine 1022 of the audio processing module 102 can acquire a first sound type of audio data from audio streams processed by the application program 100 for acting as audio data S_{REMOTE} corresponding to a first language. For example, audio (sound) category of Microsoft Windows 10 operating system includes at least the following: movie, media, game chat, speech, communications, alerts, sound effects, game media, game effect, others. Each audio data can be tagged with one of sound categories. The audio engine 1022 can acquire at least one sound type of audio data from audio streams processed by the application program 100 for acting as audio data S_{REMOTE} corresponding to a first language. In an embodiment, the audio engine 1022 acquires all of the audio data tagged as "Game chat" from the audio streams processed by the application program 100 for acting as the audio data S_{REMOTE} corresponding to the first language according to the audio category tagged with the audio data. In an alternative embodiment, the audio engine 1022 acquires all of the audio data tagged as any of "Game chat", "communications" and "others" from the audio streams processed by the application program 100 for acting as the audio data S_{REMOTE} corresponding to the first language according to the audio category tagged with the audio data.

For example, please further refer to FIG. 1 and FIG. 3. If the application program 100 is game software. The audio engine 1022 includes a stream effect (SFX) APO. As shown in Table 1, the SFX APO can receive audio (sound) data of game from the application program 100 for sound effect processing. For example, the SFX APO can obtain audio data tagged as "game chat" (e.g., player vocal shown in Table 1) for sound effect processing. Before sound effect processing, the SFX APO can copy the audio data tagged as "game chat", and the copied audio data is utilized as the audio data S_{REMOTE} corresponding to the first language. In other words, the audio engine 1022 can utilize the APO to acquire the required sound types of audio data from the audio streams. In more detail, the audio engine 1022 merely acquires the required sound types of audio data from the audio streams without further processing the acquired audio data.

**Table 1**

| Sound data in game | Background Music (BGM) | Partial sound effect (Punch sound, collision sound... etc.) | NPC Sound | Game environment sound | Player vocal (for communication, live broadcast) |
|---|---|---|---|---|---|
| Audio Stream Category Of Windows 10 operating system | In Game Music | Game Effect | Game Effect | Game Effect | Game Chat |

Moreover, the audio engine 1022 transmits the audio data S_{REMOTE} corresponding to the first language to the relay processing module 104 and the driver 108. The relay processing module 104 transmits the audio data S_{REMOTE} corresponding to the first language to the smart interpreter engine 106. The smart interpreter engine 106 converts the audio data S_{REMOTE} corresponding to the first language into text data TXT_{REMOTE} corresponding to a second language and provides the text data TXT_{REMOTE} corresponding to the second language to the delay processing module 104. After that, the delay processing module 104 provides the text data TXT_{REMOTE} corresponding to the second language to the display 40. The display 40 displays the text data TXT_{REMOTE} corresponding to the second language for the user. Further, since the audio data S_{REMOTE} corresponding to the first language is a digital signal, the driver 108 converts the audio data S_{REMOTE} corresponding to the first language into an analog speech signal S_{REMOTE'} corresponding to the first language. The analog speech signal S_{REMOTE'} corresponding to the first language is an analog signal. For example, the driver 108 includes a digital to analog converter (not shown in figures). The digital to analog converter can convert the audio data S_{REMOTE} corresponding to the first language into an analog speech signal S_{REMOTE'} corresponding to the first language. The driver 108 transmits the analog speech signal S_{REMOTE'} corresponding to the first language to the audio output device 20. The audio output device 20 playbacks the analog speech signal S_{REMOTE'} corresponding to the first language to generate sound to the user.

For example, if the first language is English and the second language is Chinese. After acquiring the audio data S_{REMOTE} in English, the audio processing module 102 provides the audio data S_{REMOTE} in English to the smart interpreter engine 106 through the delay processing module 104. The smart interpreter engine 106 converts the audio data S_{REMOTE} in English into text data TXT_{REMOTE} in Chinese, such that the display 40 displays the text data TXT_{REMOTE} in Chinese. Meanwhile, the driver 108 converts the audio data S_{REMOTE} in English into an analog speech signal S_{REMOTE'} in English and transmits the analog speech signal S_{REMOTE'} in English to the audio output device 20 for playback. Therefore, when a user familiar with the second language is using the electronic system 1, the user can hear the analog speech signal S_{REMOTE'} corresponding to the first language played by the audio output device 20 and see the text data TXT_{REMOTE} corresponding to the second language displayed by the display 40. Under such a situation, even the user does not understand the analog speech signal S_{REMOTE'} corresponding to the first language, the user can understand and perceive what the information conveyed by the audio data S_{REMOTE} corresponding to the first language while seeing the text data TXT_{REMOTE} corresponding to the second language displayed by the display 40.

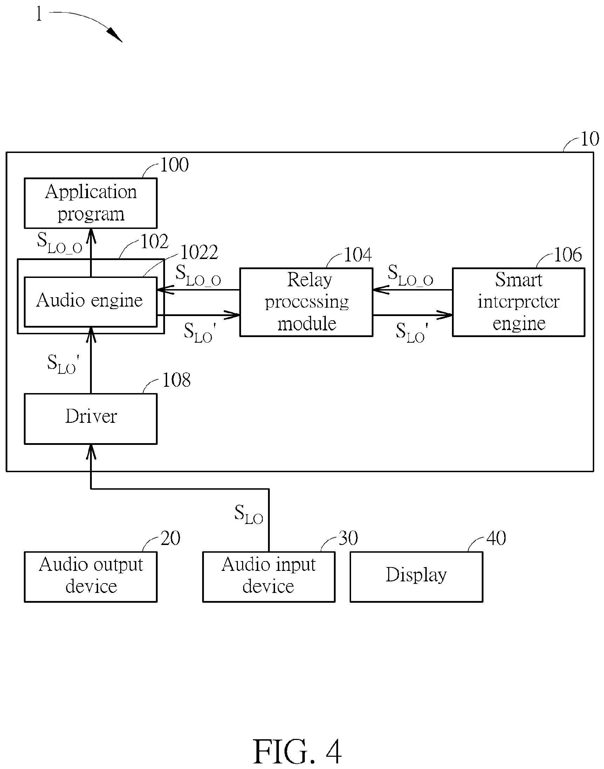

Please refer to FIG. 4. FIG. 4 is a schematic diagram of the electronic system 1 operating in a second operation mode (capturing mode) according to a first exemplary embodiment of the invention. As shown in FIG. 4, the audio processing module 102 includes an audio engine 1022. For example, the audio engine 1022 can be an APO. In the second operation mode (capturing mode), the audio input device 30 acquires speech sounds of the current environment to generate an analog speech signal S_{LO} corresponding to a first language. The audio input device 30 transmits the analog speech signal S_{LO} corresponding to the first language to the driver 108. Since the analog speech signal S_{LO} corresponding to the first language is an analog signal, the driver 108 converts the analog speech signal S_{LO} corresponding to the first language into audio data S_{LO'} corresponding to the first language. The audio data S_{LO'} corresponding to the first language is a digital signal. For example, the driver 108 includes an analog to digital converter (not shown in figures). The analog to digital converter can convert the analog speech signal S_{LO} corresponding to the first language into the audio data S_{LO'} corresponding to the first language. The driver 108 transmits the audio data S_{LO'} corresponding to the first language to the audio engine 1022. The audio engine 1022 transmits the audio data S_{LO'} corresponding to the first language to the relay processing module 104. The relay processing module 104 transmits the audio data S_{LO'} corresponding to the first language to the smart interpreter engine 106.

The smart interpreter engine 106 converts the audio data S_{LO'} corresponding to the first language into audio data S_{LO_O} corresponding to a second language. In an embodiment, the smart interpreter engine 106 converts the audio data S_{LO'} corresponding to the first language into text data corresponding to the first language and further converts the text data corresponding to the first language into text data corresponding to the second language. Further, the smart interpreter engine 106 converts the text data corresponding to the second language into audio data S_{LO_O} corresponding to the second language. In an alternative embodiment, the smart interpreter engine 106 converts the audio data S_{LO'} corresponding to the first language into text data corresponding to the second language and further converts the text data corresponding to the second language into audio data S_{LO_O} corresponding to the second language. Moreover, the smart interpreter engine 106 transmits the audio data S_{LO_O} corresponding to the second language to the relay processing module 104. The relay processing module 104 transmits the audio data S_{LO_O} corresponding to the second language to the audio engine 1022. The audio engine 1022 provides the audio data S_{LO_O} corresponding to the second language to the application program 100. The application program 100 provides the audio data S_{LO_O} corresponding to the second language to the external device. As a result, when a user familiar with the second language is using the external device, the user can understand and perceive the information conveyed by the user of the electronic system 1 when hearing the audio data S_{LO_O} corresponding to the second language outputted by the electronic system 1.

In other words, when the electronic system 1 operates in a first operation mode (rendering mode), the audio processing module 102 transmits the audio data S_{REMOTE} corresponding to the first language, which is acquired from the audio streams, to the relay processing module 104. When the electronic system 1 operates in a second operation mode (capturing mode), the audio processing module 102 transmits the audio data S_{LO'} corresponding to the first language, which is converted by the driver 108, to the relay processing module 104. Moreover, the relay processing module 104 receives and provides the audio data S_{LO_O} corresponding to the second language to the application program 100. Since the relay processing module 104 is disposed in the host 10, the audio data S_{REMOTE} corresponding to the first language and the audio data S_{LO'} converted by the driver and corresponding to the first language can be transmitted to the relay processing module 104 by the audio processing module 102, without being transmitted through the driver 108. In addition, during the first operation mode (rendering mode), the relay processing module 104 transmits the audio data S_{REMOTE} corresponding to the first language to the smart interpreter engine 106 and transmits the text data TXT_{REMOTE} corresponding to the second language to the display 40 for display. During the second operation mode (capturing mode), the relay processing module 104 transmits the audio data S_{LO'} corresponding to the first language to the smart interpreter engine 106 and transmits audio data S_{LO_O} to the audio processing module 102. Therefore, the relay processing module 104 can coordinate and arrange the input and output of the smart interpreter engine 106 for realizing related data conversion process.

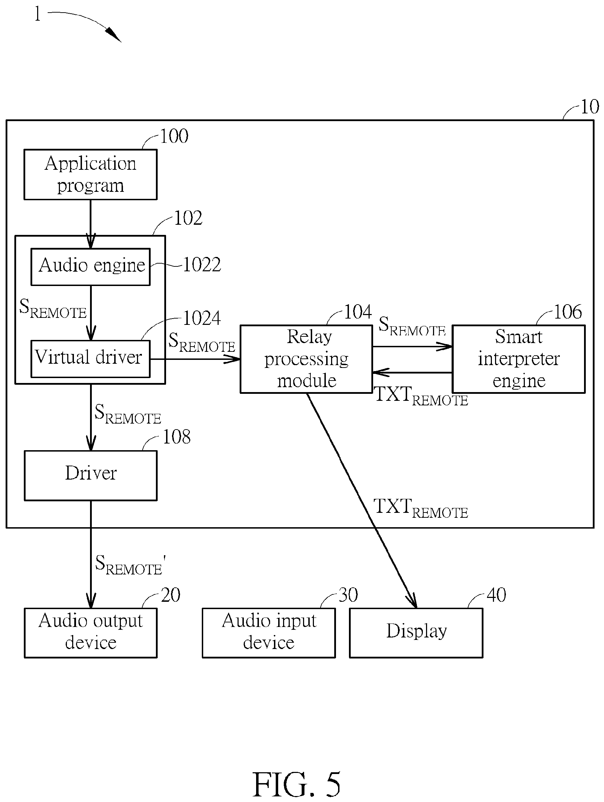

Please refer to FIG. 5. FIG. 5 is a schematic diagram of the electronic system 1 operating in a first operation mode (rendering mode) according to a second exemplary embodiment of the invention. As shown in FIG. 5, the audio processing module 102 includes an audio engine 1022 and a virtual driver 1024. For example, the audio engine 1022 can be an APO. In an embodiment, the audio engine 1022 can be a user mode component of an operating system. The virtual driver 1024 can be a kernel mode component of the operating system. The virtual driver 1024 can execute in the kernel mode. In the first operation mode (rendering mode), the audio engine 1022 can acquire at least one sound type of audio data from audio streams processed by the application program 100 for acting as audio data S_{REMOTE} corresponding to a first language. The audio engine 1022 can utilize the APO to acquire required sound types of audio data. The audio engine 1022 merely acquires the required sound types of audio data from the audio streams without further processing the acquired audio data. Moreover, the virtual driver 1024 can intercept the audio data S_{REMOTE}, which is acquired by the audio engine 1022, corresponding to the first language. Further, the virtual driver 1024 transmits the audio data S_{REMOTE} corresponding to the first language to the relay processing module 104 and the driver 108. That is, the virtual driver 1024 can intercept the audio data S_{REMOTE} corresponding to the first language from the audio engine 1022 and transmits the intercepted audio data S_{REMOTE} remaining untouched or unchanged to the relay processing module 104 and the driver 108.

The relay processing module 104 transmits the audio data S_{REMOTE} corresponding to the first language to the smart interpreter engine 106. The smart interpreter engine 106 converts the audio data S_{REMOTE} corresponding to the first language into text data TXT_{REMOTE} corresponding to a second language and provides the text data TXT_{REMOTE} corresponding to the second language to the delay processing module 104. Further, the delay processing module 104 provides the text data TXT_{REMOTE} corresponding to the second language to the display 40. The display 40 displays the text data TXT_{REMOTE} corresponding to the second language for the user. In addition, since the audio data S_{REMOTE} corresponding to the first language is a digital signal, the driver 108 converts the audio data S_{REMOTE} corresponding to the first language into an analog speech signal S_{REMOTE'} corresponding to the first language. The analog speech signal S_{REMOTE'} corresponding to the first language is an analog signal. For example, the driver 108 includes a digital to analog converter (not shown in figures). The digital to analog converter can convert the audio data S_{REMOTE} corresponding to the first language into an analog speech signal S_{REMOTE'} corresponding to the first language. The driver 108 transmits the analog speech signal S_{REMOTE'} corresponding to the first language to the audio output device 20. The audio output device 20 playbacks the analog speech signal S_{REMOTE'} corresponding to the first language to generate sound to the user. In other words, when a user familiar with the second language is using the electronic system 1, the user can hear the analog speech signal S_{REMOTE'} corresponding to the first language played by the audio output device 20 and see the text data TXT_{REMOTE} corresponding to the second language displayed by the display 40. Under such a situation, even the user does not understand the analog speech signal S_{REMOTE'} corresponding to the first language, the user can understand and perceive what the information conveyed by the audio data S_{REMOTE} corresponding to the first language while seeing the text data TXT_{REMOTE} corresponding to the second language displayed by the display 40.

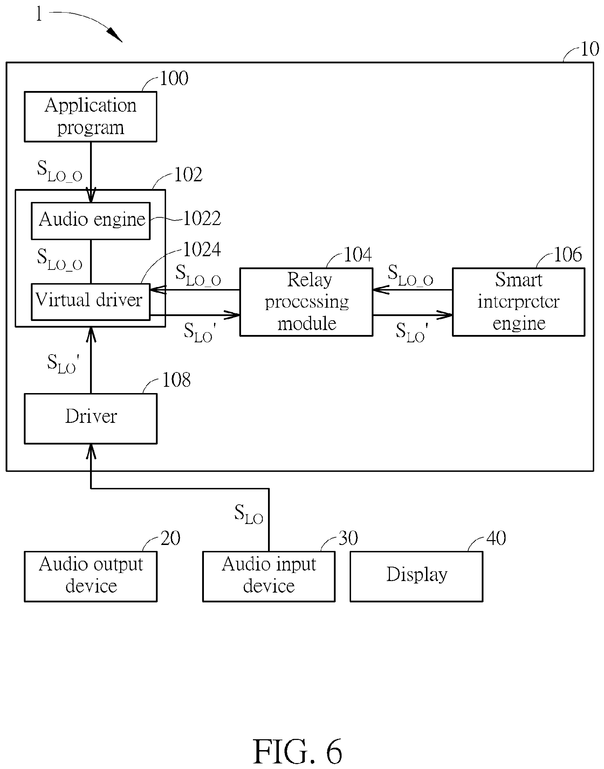

Please refer to FIG. 6. FIG. 6 is a schematic diagram of the electronic system 1 operating in a second operation mode (capturing mode) according to a second exemplary embodiment of the invention. As shown in FIG. 6, the audio processing module 102 includes an audio engine 1022 and a virtual driver 1024. For example, the audio engine 1022 can be an APO. In an embodiment, the audio engine 1022 can be a user mode component of an operating system. The virtual driver 1024 can be a kernel mode component of the operating system. The virtual driver 1024 can execute in the kernel mode. In the second operation mode (capturing mode), the audio input device 30 acquires speech sounds of the current environment to generate an analog speech signal S_{LO} corresponding to a first language. The audio input device 30 transmits the analog speech signal S_{LO} corresponding to the first language to the driver 108. Since the analog speech signal S_{LO} corresponding to the first language is an analog signal, the driver 108 converts the analog speech signal S_{LO} corresponding to the first language into audio data S_{LO'} corresponding to the first language. The audio data S_{LO'} corresponding to the first language is a digital signal. For example, the driver 108 includes an analog to digital converter (not shown in figures). The analog to digital converter can convert the analog speech signal S_{LO} corresponding to the first language into the audio data S_{LO'} corresponding to the first language. After that, the virtual driver 1024 can intercept the audio data S_{LO'} converted by the driver 108 and corresponding to the first language. The virtual driver 1024 transmits the audio data S_{LO'} remaining untouched or unchanged to the relay processing module 104. For example, the user can develop and create a virtual driver 1024 on the platform of the operating system (e.g., Microsoft Windows 10 operating system) and the virtual driver 1024 may be set to work within a driver layer. The virtual driver 1024 utilizes a software to simulate a hardware (e.g., audio input device 30) for replacing the original software, such that when intercepting the audio data S_{LO'} corresponding to the first language, which is converted by the driver 108, the virtual driver 1024 can transmit the audio data S_{LO'} remaining untouched to the relay processing module 104.

The relay processing module 104 transmits the audio data S_{LO'} corresponding to the first language to the smart interpreter engine 106. The smart interpreter engine 106 converts the audio data S_{LO'} corresponding to the first language into audio data S_{LO_O} corresponding to a second language. The smart interpreter engine 106 transmits the audio data S_{LO_O} corresponding to the second language to the relay processing module 104. The relay processing module 104 transmits the audio data S_{LO_O} corresponding to the second language to the virtual driver 1024. The virtual driver 1024 transmits the audio data S_{LO_O} (remaining untouched or unchanged) corresponding to the second language to the audio engine 1022. The audio engine 1022 provides the audio data S_{LO_O} corresponding to the second language to the application program 100. The application program 100 provides the audio data S_{LO_O} corresponding to the second language to the external device. As a result, when a user familiar with the second language is using the external device, the user can understand and perceive the information conveyed by the user of the electronic system 1 when hearing the audio data S_{LO_O} corresponding to the second language outputted by the electronic system 1.

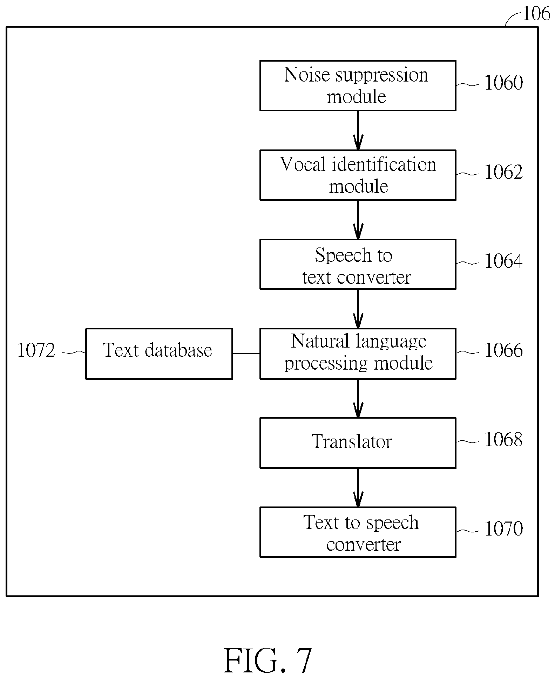

Please refer to FIG. 7. FIG. 7 is a schematic diagram of the smart interpreter engine 106 shown in FIG. 1 according to an exemplary embodiment of the invention. The smart interpreter engine 106 includes a noise suppression module 1060, a vocal identification module 1062, a speech to text converter 1064, a natural language processing (NLP) module 1066, a translator 1068, a text to speech converter 1070 and a text database 1072. When the electronic system 1 operates in the first operation mode (capturing mode), the audio processing module 102 transmits the audio data S_{REMOTE} corresponding to the first language to the relay processing module 104. The relay processing module 104 transmits the audio data S_{REMOTE} corresponding to the first language to the smart interpreter engine 106. The noise suppression module 1060 performs a noise suppression process on the audio data S_{REMOTE} corresponding to the first language for reducing noise component in the audio data. The vocal identification module 1062 performs a vocal identification process on the noise-suppressed audio data S_{REMOTE} corresponding to the first language to generate vocal identification data corresponding to the first language. The vocal identification data is vocal data in the noise-suppressed audio data S_{REMOTE}, which is determined as a human voice by the vocal identification module 1062. In addition, if there is no noise suppression requirement, the smart interpreter engine 106 can directly transmit the noise-suppressed audio data S_{REMOTE} to the vocal identification module 1062 for vocal identification processing. The speech to text converter 1064 converts the vocal identification data corresponding to the first language into text data corresponding to the first language. The text data corresponding to the first language may include at least one word.

The NLP module 1066 can convert the text data corresponding to the first language into glossary text data corresponding to the first language. For example, the NLP module 1066 converts the text data corresponding to the first language into glossary text data corresponding to the first language according to the application program 100 being executed in the host 10. The host 10 can inform the smart interpreter engine 106 of information of the application program 100 being executed in the host 10. Besides, the smart interpreter engine 106 can ask the host 10 which application program 100 is executing by the host 10. For example, the NLP module 1066 queries the text database 1072 according to the application program 100 being executed in the host 10 and the text data corresponding to the first language converted by the speech to text converter 1064. The text database 1072 includes a plurality of text samples corresponding to the first language and a plurality of application programs, and a plurality of glossary texts corresponding to the text samples. For example, a first text sample corresponding to the first language and a first application program has corresponding glossary text corresponding to the first language. A second text sample corresponding to the first language and a second application program has corresponding glossary text corresponding to the first language and so on. Each text sample includes at least one word. Each glossary text includes at least one word. As such, the NLP module 1066 can compare the application program 100 being executed in the host 10 and the text data corresponding to the first language with the text samples of the text database 1072, so as to find out the match results and accordingly determine the corresponding glossary text.

When a word of the text data corresponding to the first language matches a first text sample of the plurality of text samples of the text database 1072 and the application program 100 being executed in the host 10 matches an application program corresponding to the first text sample, the NLP module 1066 converts the word of the text data corresponding to the first language into the glossary text corresponding to the first text sample. When a plurality of words of the text data corresponding to the first language matches a first text sample of the plurality of text samples of the text database 1072 and the application program 100 being executed in the host 10 matches an application program corresponding to the first text sample, the NLP module 1066 converts the plurality of words of the text data corresponding to the first language into the glossary text corresponding to the first text sample. Moreover, the translator 1068 converts the glossary text data corresponding to the first language into text data TXT_{REMOTE} corresponding to a second language. As a result the text data TXT_{REMOTE} corresponding to a second language can be provided to the display 40 for display to the user.

For example, please refer to Table 2. Table 2 illustrates an exemplary embodiment of the text database 1062. Suppose the first language is English and the second language is Chinese. The first application program is League of Legends game software. The second application program is Minecraft game software. The third application program is SimCity game software. The fourth application program is general application program. For example, in this embodiment, the fourth application program can be any application program except the fifth application program. The glossary text corresponding to the fourth application program may be a daily life expression, rather than a glossary text dedicated to a component, a prop or a role in a specific game software. The fifth application program is PUBG (PLAYER UNKNOWN'S BATTLE GROUNDS) game software. If an English word in the text data is "flash" and the application program 100 being executed in the host 10 is the first application program, the NLP module 1066 converts the English word "flash" into a glossary text "flash" of English corresponding to the first application program. The translator 1068 converts the glossary text "flash" of English into Chinese words " 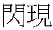 " (Chinese characters). If an English word in the text data is "flash" and the application program 100 being executed in the host 10 is the second application program, the NLP module 1066 converts the English word "flash" into a glossary text "accelerator" of English corresponding to the second application program. The translator 1068 converts the glossary text "accelerator" of English into Chinese words " 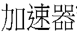 " (Chinese characters). In other words, each application program may apply different glossary texts (i.e. different glossary texts for different application programs). The user can choose different text database (also called language pack) for the smart interpreter engine 106. The smart interpreter engine 106 can also detect the kind of application program being executed and accordingly switch to the corresponding text database for interpretation. If an English word in the text data is "feeder" and the application program 100 being executed in the host 10 is the first application program, the NLP module 1066 converts the English word "feeder" into a glossary text "fertilizer" of English corresponding to the first application program. The translator 1068 converts the glossary text "fertilizer" of English into Chinese words " 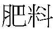 " (Chinese characters). If an English word in the text data is "feeder" and the application program 100 being executed in the host 10 is the third application program, the NLP module 1066 converts the English feeder "flash" into a glossary text "feeder" of English corresponding to the third application program. The translator 1068 converts the glossary text "feeder" of English into Chinese words " 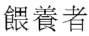 " (Chinese characters)and the like.

**TABLE 2**

| text data corresponding to first language | application program | glossary text corresponding to first language | meanings of glossary text corresponding to first language | text corresponding to second language after translated |
|---|---|---|---|---|
| Flash | first application program | Flash | a skill from Summoner that quick moves from A place to B place | 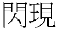 ("shan hsien" in Romanized form) |
| | second application program | Accelerator | an accelerator for character motion | 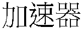 ("chia su chi" in Romanized form) |
| Feeder | first application program | Fertilizer | the player control a NPC always play quick dead | 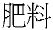 ("fei liao" in Romanized form) |
| | third application program | Feeder | the man in the farm and job is feeding livestock | 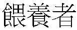 ("wei yang che" in Romanized form) |
| Chicken Dinner | fourth application program | Eat chicken | cooked chicken and be the dinner | 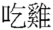 ("chih chi" in Romanized form) |
| | fifth application program | Win | "WINER, WINER, CHICKEN DINNER" means the won side of the battle or play game | 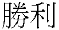 ("sheng li" in Romanized form) |

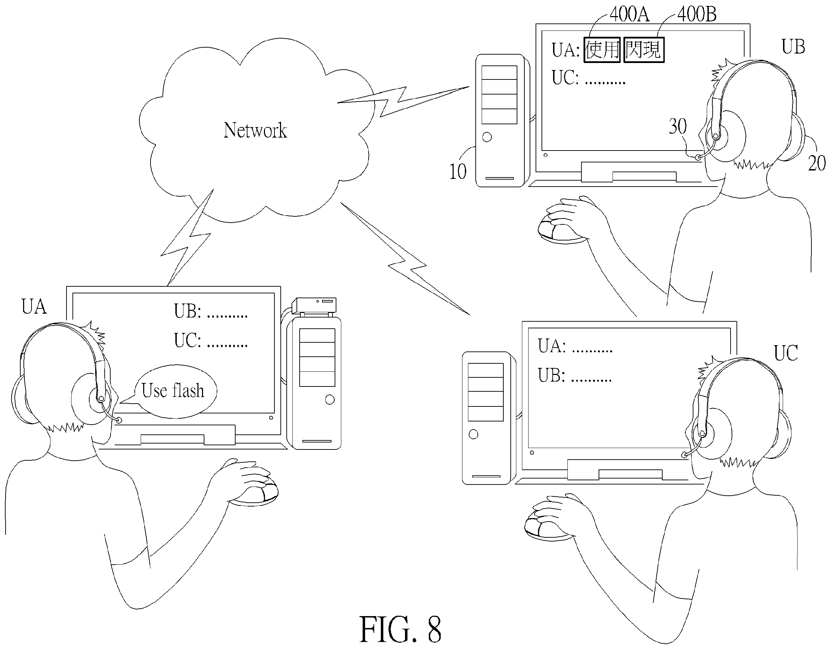

Please refer to FIG. 8. FIG. 8 is a schematic diagram of the electronic system 1 applied for an online game according to an exemplary embodiment of the invention. The user UA can speak English, and can hear and understand English. The user UB can speak Chinese, and can hear and understand Chinese. The user UC can speak German, and can hear and understand German. As shown in FIG. 8, the users UA, UB and UC are utilizing their electronic systems to implement the first application program (e.g., League of Legends game software) for playing League of Legends online game, respectively. For example, the user UB utilizes the electronic system 1 of the invention to implement the first application program. When playing the League of Legends online game, the user UA says "use flash" in English and the corresponding analog speech signal of English is generated and transmitted to the electronic system 1 utilized by the user UB through the network. The electronic system 1 utilized by the user UB converts the analog speech signal of English in to audio data S_{REMOTE} (digital data) of English. Since the host 10 is currently implementing the first application program, the smart interpreter engine 106 converts the audio data "flash" of English into Chinese words " 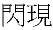 " (Chinese characters) after querying the text database 1072. Moreover, the smart interpreter engine 106 converts the audio data "use" of English into Chinese words "æffl" (Chinese characters) after querying the text database 1072. Therefore, as shown in FIG. 8, the user UB can hear the spoken words "use flash" in English played by the audio output device 20 based on the analog speech data S_{REMOTE'}. A display area 400A of the display 40 shows the Chinese words "æffl" in Chinese characters. A display area 400B of the display 40 shows the Chinese words " 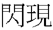 " in Chinese characters. As a result, although the user UB does not understand English and does hear the analog speech data S_{REMOTE'} (i.e. the spoken words "use flash") of English played by the audio output device 20, the user UB can still understand and perceive what the information conveyed by the user UA while seeing the Chinese words " 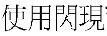 " in Chinese characters displayed on the display 40. Therefore, the electronic system 1 can not only convert the speech data into text data, but also provide flexible glossary translation for different application situations, so as to meet player's demands and increase player immersion in the esports game.

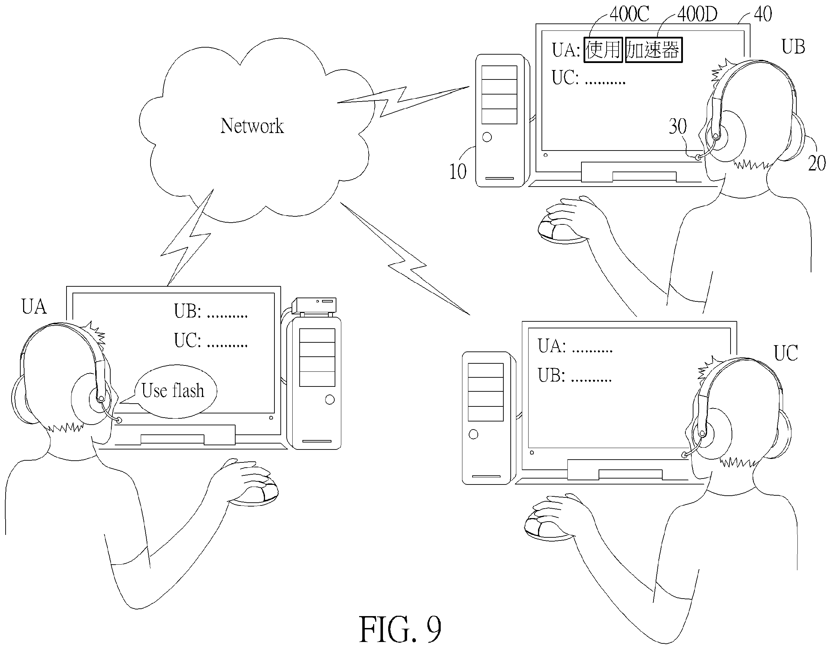

Please refer to FIG. 9. FIG. 9 is a schematic diagram of the electronic system 1 applied for an online game according to an alternative exemplary embodiment of the invention. The user UA can speak English, and can hear and understand English. The user UB can speak Chinese, and can hear and understand Chinese. The user UC can speak German, and can hear and understand German. As shown in FIG. 9, the users UA, UB and UC are utilizing their electronic systems to implement the second application program (e.g., Minecraft game software) for playing Minecraft online game, respectively. For example, the user UB utilizes the electronic system 1 of the invention to implement the second application program. When playing the Minecraft online game, the user UA says "use flash" in English and the corresponding analog speech signal of English is generated and transmitted to the electronic system 1 utilized by the user UB through the network. The electronic system 1 utilized by the user UB converts the analog speech signal of English in to audio data S_{REMOTE} (digital data) of English. Since the host 10 is currently implementing the second application program, the smart interpreter engine 106 converts the audio data "flash" of English into Chinese words "" (Chinese characters) after querying the text database 1072. Moreover, the smart interpreter engine 106 converts the speech data "use" of English into Chinese words "æffl" (Chinese characters) after querying the text database 1072. Therefore, as shown in FIG. 9, the user UB can hear the spoken words "use flash" in English played by the audio output device 20 based on the analog speech data S_{REMOTE'}. A display area 400C of the display 40 shows Chinese words "æffl" in Chinese characters. A display area 400D of the display 40 shows Chinese words " 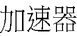 " in Chinese characters. As a result, although the user UB does not understand English and does hear the analog speech data S_{REMOTE'} (i.e. the spoken words "use flash") of English played by the audio output device 20, the user UB can still understand and perceive what the information conveyed by the user UA while seeing the Chinese words " 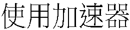 " in Chinese characters displayed on the display 40.

Please further refer to FIGs. 4 and 6-7. When the electronic system 1 operates in the second operation mode (capturing mode), the driver 108 converts the analog speech signal S_{LO} corresponding to the first language into audio data S_{LO'} corresponding to the first language and transmits the audio data S_{LO'} corresponding to the first language to the audio processing module 102. The audio processing module 102 transmits the audio data S_{LO'} corresponding to the first language to the relay processing module 104. After that, the relay processing module 104 transmits the audio data S_{LO'} corresponding to the first language to the smart interpreter engine 106. Further, the noise suppression module 1060 performs a noise suppression process on the audio data S_{LO'} corresponding to the first language for reducing noise component in the audio data. The vocal identification module 1062 performs a vocal identification process on the noise-suppressed audio data S_{LO'} corresponding to the first language to generate vocal identification data corresponding to the first language. The speech to text converter 1064 converts the vocal identification data corresponding to the first language into text data corresponding to the first language. As mentioned above, The NLP module 1066 can convert the text data corresponding to the first language into glossary text data corresponding to the first language. The translator 1068 converts the glossary text data corresponding to the first language into text data corresponding to a second language. Moreover, the text to speech converter 1070 converts the text data corresponding to the second language into the audio data S_{LO_O} corresponding to the second language. After that, the smart interpreter engine 106 transmits the audio data S_{LO_O} corresponding to the second language to the relay processing module 104. The relay processing module 104 transmits the audio data S_{LO_O} corresponding to the second language to the audio processing module 102. The audio processing module 102 transmits the audio data S_{LO_O} corresponding to the second language to the application program 100. The application program 100 provides the audio data S_{LO_O} corresponding to the second language to the external devices. Under such a situation, when a user familiar with the second language is using the external device, the user can understand and perceive the information conveyed by the user of the electronic system 1 after hearing the audio data S_{LO_O} corresponding to the second language outputted by the electronic system 1.

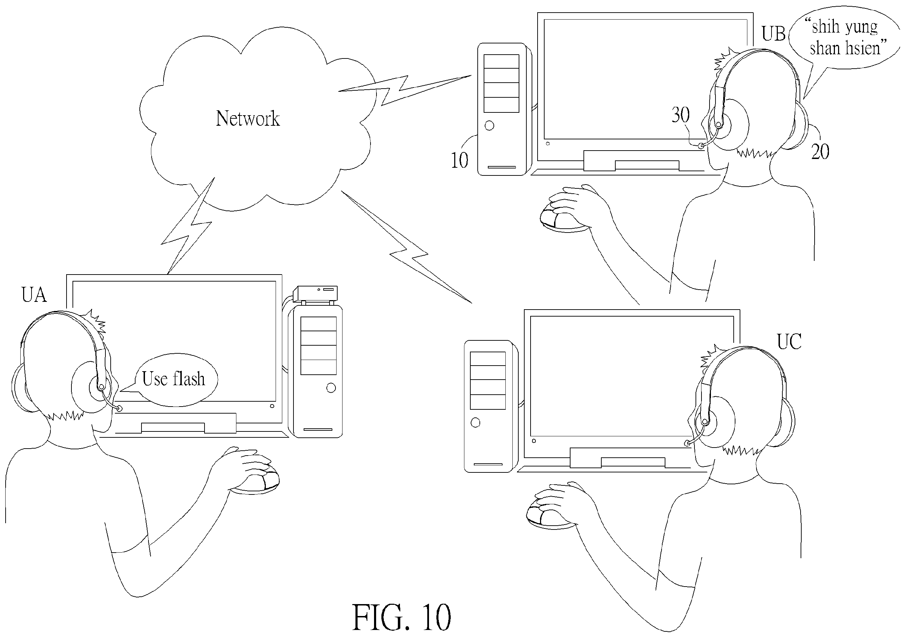

Please refer to FIG. 10. FIG. 10 is a schematic diagram of the electronic system 1 applied for an online game according to an alternative exemplary embodiment of the invention. The user UA can speak English, and can hear and understand English. The user UB can speak Chinese, and can hear and understand Chinese. The user UC can speak German, and can hear and understand German. As shown in FIG. 10, the users UA, UB and UC are utilizing their electronic systems to implement the first application program (e.g., League of Legends game software) for playing League of Legends online game, respectively. For example, the user UA utilizes the electronic system 1 of the invention to implement the first application program. When playing the League of Legends online game, the user UA says "use flash" in English and the corresponding analog speech signal of English is generated. The driver 108 of the electronic system 1 utilized by the user UA converts the analog speech signal of English into digital audio data of English. Since the host 10 is currently implementing the first application program, the smart interpreter engine 106 converts the audio data "use flash" of English into audio data " 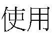 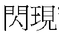 " (i.e. "shih yung shan hsien" in Romanized form) of Chinese and provides the converted audio data of Chinese to the user UB. As a result, the user UB can understand and perceive what the information conveyed by the user UA while hearing the speech data " 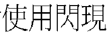 " (i.e. "shih yung shan hsien" in Romanized form) of Chinese.

In summary, the embodiments of the invention provide the user utilizing the electronic system 1 to hear the analog speech data corresponding to the first language played by the audio output device 20 and see the text data displayed by the display 40. Under such a situation, even the user does not understand the analog speech data corresponding to the first language, the user can understand and perceive what the information conveyed by the speech data corresponding to the first language while seeing the text data corresponding to the second language displayed by the display 40. Besides, the embodiments of the invention can convert the analog speech data inputted by the user corresponding to the first language into audio data corresponding to a second language, so as to allow other user can understand what the user utilizing the electronic system 1 conveys. Moreover, the embodiments of the invention can acquire audio data in game and submit audio data to a smart interpreter engine for vocal identification and neural machine translation so as to facilitate the user to easy understand what the other user conveys. As such, the embodiments of the invention can bring good interaction between users using different languages and effectively improve the user experience.

## Claims

1. An electronic system (1) comprising:
a host (10), comprising:
an audio processing module (102) for acquiring audio data corresponding to a first language from audio streams processed by an application program (100) executed on the host (10), wherein the application program (100) executed on the host (10) comprises a specific game software;
a relay processing module (104) for receiving the audio data corresponding to the first language from the audio processing module (102);
a smart interpreter engine (106) for receiving the audio data corresponding to the first language from the relay processing module (104) and converting the audio data corresponding to the first language into text data corresponding to the first language, and converting the text data corresponding to the first language into text data corresponding to a second language according to the game software executed on the host (10), the smart interpreter engine (106) comprising:
a natural language processing module (1066) for converting the text data corresponding to the first language into glossary text data corresponding to the first language according to the game software executed by the host (10);
a text database (1072) comprising a plurality of text samples corresponding to the first language and a plurality of game software, and a plurality of glossary texts corresponding to the text samples, wherein the natural language processing module (1066) queries the text database (1072) to determine the glossary text data corresponding to the first language according to the game software being executed in the host (10) and the text data corresponding to the first language; and
a translator (1068) for converting the glossary text data corresponding to the first language into text data corresponding to the second language, wherein the smart interpreter engine (106) transmits the text data corresponding to the second language to the relay processing module (104); and
a driver (108) for converting the audio data corresponding to the first language into an analog speech signal corresponding to the first language;
an audio output device (20) for playing the analog speech signal corresponding to the first language; and
a display (40) for receiving the text data corresponding to the second language from the relay processing module (104) and displaying the text data corresponding to the second language.

2. The electronic system (1) of claim 1, wherein the audio processing module (102) comprises:
an audio engine (1022) for acquiring the audio data corresponding to the first language from the audio streams processed by the game software executed on the host (10) and transmitting the audio data corresponding to the first language to the relay processing module (104).

3. The electronic system (1) of claim 1 or 2, wherein the audio processing module (102) comprises:
an audio engine (1022) for acquiring the audio data corresponding to the first language from the audio streams processed by the game software executed on the host (10); and
a virtual driver (1024) for intercepting the audio data acquired by the audio engine (1022) and corresponding to the first language and transmitting the intercepted audio data corresponding to the first language to the relay processing module (104).

4. A multimedia processing method, for an electronic system (1), the electronic system (1) comprising a host (10), the host (10) comprising an audio processing module (102), a relay processing module (104), a smart interpreter engine (106) and a driver (108), the smart interpreter engine (106) comprising a natural language processing module (1066), a translator (1068) and a text database (1072), the multimedia processing method comprising the steps of:
utilizing the audio processing module (102) to acquire audio data corresponding to a first language from audio streams processed by an application program (100) executed on the host (10) and transmitting the audio data corresponding to the first language to the relay processing module (104) and the driver (108), wherein the application program (100) executed on the host (10) comprises a specific game software;
utilizing the relay processing module (104) to transmit the audio data corresponding to the first language to the smart interpreter engine (106);
utilizing the smart interpreter engine (106) to convert the audio data corresponding to the first language into text data the first language;
utilizing the natural language processing module (1066) to convert the text data corresponding to the first language into glossary text data corresponding to the first language according to the game software executed by the host (10), wherein the text database (1072) comprises a plurality of text samples corresponding to the first language and a plurality of application programs, and a plurality of glossary texts corresponding to the text samples, wherein the natural language processing module (1066) queries the text database (1072) to determine the glossary text data corresponding to the first language according to the game software being executed in the host (10) and the text data corresponding to the first language;
utilizing the translator (1068) to convert the glossary text data corresponding to the first language into text data corresponding to the second language;
utilizing the smart interpreter engine (106) to transmit the text data corresponding to the second language to the relay processing module (104);
utilizing the relay processing module (104) to transmit the text data corresponding to the second language to a display (40) of the electronic system (1) for displaying; and
utilizing the driver (108) to convert the audio data corresponding to the first language into an analog speech signal corresponding to the first language and output the analog speech signal corresponding to the first language to an audio output device (20) of the electronic system (1) for playing.

5. The multimedia processing method of claim 4, wherein the audio processing module (102) comprises an audio engine (1022), the audio engine (1022) acquires the audio data corresponding to the first language from the audio streams processed by the game software executed on the host (10) and transmits the audio data corresponding to the first language to the relay processing module (104).

6. The multimedia processing method of claim 4 or 5, wherein the audio processing module (102) comprises an audio engine (1022) and a virtual driver (1024), the audio engine (1022) acquires the audio data corresponding to the first language from the audio streams processed by the game software executed on the host (10), and the virtual driver (1024) intercepts the audio data acquired by the audio engine (1022) and corresponding to the first language and transmits the intercepted audio data corresponding to the first language to the relay processing module (104).

## Patentansprüche

1. Elektronisches System (1), welches umfasst:
einen Host (10), umfassend:
ein Audioverarbeitungsmodul (102) zum Erfassen von Audiodaten, die einer ersten Sprache entsprechen, aus Audioströmen, die von einem auf dem Host (10) ausgeführten Anwendungsprogramm (100) verarbeitet werden, worin das auf dem Host (10) ausgeführte Anwendungsprogramm (100) eine spezifische Spielsoftware umfasst;
ein Relaisverarbeitungsmodul (104) zum Empfangen der Audiodaten, die der ersten Sprache entsprechen, von dem Audioverarbeitungsmodul (102);
eine intelligente Dolmetschermaschine (106) zum Empfangen der Audiodaten, die der ersten Sprache entsprechen, von dem Relaisverarbeitungsmodul (104) und zum Umwandeln der Audiodaten, die der ersten Sprache entsprechen, in Textdaten, die der ersten Sprache entsprechen, und zum Umwandeln der Textdaten, die der ersten Sprache entsprechen, in Textdaten, die einer zweiten Sprache entsprechen, gemäß der Spielsoftware, die auf dem Host (10) ausgeführt wird, wobei die intelligente Dolmetschermaschine (106) umfasst:
ein Modul (1066) zur Verarbeitung natürlicher Sprache zum Umwandeln der Textdaten, die der ersten Sprache entsprechen, in Glossartextdaten, die der ersten Sprache entsprechen, gemäß der von dem Host (10) ausgeführten Spielsoftware;
eine Textdatenbank (1072), die mehrere Textmuster, die der ersten Sprache entsprechen, und eine Vielzahl von Spielsoftware und mehrere Glossartexte umfasst, die den Textmustern entsprechen, wobei das Modul (1066) zur Verarbeitung natürlicher Sprache die Textdatenbank (1072) abfragt, um die Glossartextdaten, die der ersten Sprache entsprechen, entsprechend der Spielsoftware, die in dem Host (10) ausgeführt wird, und die Textdaten, die der ersten Sprache entsprechen, zu bestimmen; und
einen Übersetzer (1068) zum Umwandeln der Glossartextdaten, die der ersten Sprache entsprechen, in Textdaten, die der zweiten Sprache entsprechen, wobei die intelligente Dolmetschermaschine (106) die Textdaten, die der zweiten Sprache entsprechen, an das Relaisverarbeitungsmodul (104) überträgt; und
einen Treiber (108) zum Umwandeln der der ersten Sprache entsprechenden Audiodaten in ein der ersten Sprache entsprechendes analoges Sprachsignal;
eine Audio-Ausgabevorrichtung (20) zum Abspielen des analogen Sprachsignals entsprechend der ersten Sprache; und
eine Anzeige (40) zum Empfangen der der zweiten Sprache entsprechenden Textdaten von dem Relaisverarbeitungsmodul (104) und zum Anzeigen der der zweiten Sprache entsprechenden Textdaten.

2. Elektronisches System (1) nach Anspruch 1, wobei das Audioverarbeitungsmodul (102) umfasst:
eine Audio-Engine (1022) zum Erfassen der der ersten Sprache entsprechenden Audiodaten aus den von der auf dem Host (10) ausgeführten Spielsoftware verarbeiteten Audioströmen und zum Übertragen der der ersten Sprache entsprechenden Audiodaten an das Relaisverarbeitungsmodul (104).

3. Elektronisches System (1) nach Anspruch 1 oder 2, wobei das Audioverarbeitungsmodul (102) umfasst:
eine Audio-Engine (1022) zum Erfassen der der ersten Sprache entsprechenden Audiodaten aus den von der auf dem Host (10) ausgeführten Spielsoftware verarbeiteten Audioströmen; und einen virtuellen Treiber (1024) zum Abfangen der von der Audio-Engine (1022) erfassten und der ersten Sprache entsprechenden Audiodaten und zum Übertragen der abgefangenen, der ersten Sprache entsprechenden Audiodaten an das Relaisverarbeitungsmodul (104).

4. Multimediaverarbeitungsverfahren für ein elektronisches System (1), wobei das elektronische System (1) einen Host (10) umfasst, wobei der Host (10) ein Audioverarbeitungsmodul (102), ein Relaisverarbeitungsmodul (104), eine intelligente Dolmetschermaschine (106) und einen Treiber (108) umfasst, wobei die intelligente Dolmetschermaschine (106) ein Modul (1066) zur Verarbeitung natürlicher Sprache, einen Übersetzer (1068) und eine Textdatenbank (1072) umfasst, wobei das Multimediaverarbeitungsverfahren die folgenden Schritte umfasst:
Verwenden des Audioverarbeitungsmoduls (102) zum Erfassen von Audiodaten, die einer ersten Sprache entsprechen, aus Audioströmen, die von einem auf dem Host (10) ausgeführten Anwendungsprogramm (100) verarbeitet werden, und Übertragen der Audiodaten, die der ersten Sprache entsprechen, an das Relaisverarbeitungsmodul (104) und den Treiber (108), wobei das auf dem Host (10) ausgeführte Anwendungsprogramm (100) eine spezifische Spielsoftware umfasst;
Verwenden des Relaisverarbeitungsmoduls (104), um die Audiodaten, die der ersten Sprache entsprechen, an die intelligente Dolmetschermaschine (106) zu übertragen;
Verwenden der intelligenten Dolmetschermaschine (106), um die Audiodaten, die der ersten Sprache entsprechen, in Textdaten der ersten Sprache umzuwandeln;
Verwenden des Moduls (1066) zur Verarbeitung natürlicher Sprache, um die Textdaten, die der ersten Sprache entsprechen, in Glossartextdaten umzuwandeln, die der ersten Sprache gemäß der von dem Host (10) ausgeführten Spielsoftware entsprechen, wobei die Textdatenbank (1072) mehrere Textproben, die der ersten Sprache entsprechen, und mehrere Anwendungsprogramme umfasst, und mehrere Glossartexte, die den Textmustern entsprechen, umfasst, wobei das Modul (1066) zur Verarbeitung natürlicher Sprache die Textdatenbank (1072) abfragt, um die Glossartextdaten, die der ersten Sprache entsprechen, gemäß der Spielsoftware, die in dem Host (10) ausgeführt wird, und die Textdaten, die der ersten Sprache entsprechen, zu bestimmen;
Verwendung des Übersetzers (1068), um die Textdaten des Glossars, die der ersten Sprache entsprechen, in Textdaten umzuwandeln, die der zweiten Sprache entsprechen;
Verwendung der intelligenten Dolmetschermaschine (106), um die der zweiten Sprache entsprechenden Textdaten an das Relaisverarbeitungsmodul (104) zu übertragen;
Verwenden des Relaisverarbeitungsmoduls (104), um die der zweiten Sprache entsprechenden Textdaten zum Anzeigen an eine Anzeige (40) des elektronischen Systems (1) zu übertragen; und
Verwendung des Treibers (108), um die Audiodaten, die der ersten Sprache entsprechen, in ein analoges Sprachsignal, das der ersten Sprache entspricht, umzuwandeln und das analoge Sprachsignal, das der ersten Sprache entspricht, an eine Audioausgabevorrichtung (20) des elektronischen Systems (1) zum Abspielen auszugeben.

5. Multimediales Verarbeitungsverfahren nach Anspruch 4, worin das Audioverarbeitungsmodul (102) eine Audio-Engine (1022) umfasst, die Audio-Engine (1022) die der ersten Sprache entsprechenden Audiodaten aus den von der auf dem Host (10) ausgeführten Spielsoftware verarbeiteten Audioströmen erfasst und die der ersten Sprache entsprechenden Audiodaten an das Relaisverarbeitungsmodul (104) überträgt.

6. Multimediales Verarbeitungsverfahren nach Anspruch 4 oder 5, worin das Audioverarbeitungsmodul (102) eine Audio-Engine (1022) und einen virtuellen Treiber (1024) umfasst, die Audio-Engine (1022) die Audiodaten, die der ersten Sprache entsprechen, aus den Audioströmen erfasst, die von der auf dem Host (10) ausgeführten Spielsoftware verarbeitet werden, und der virtuelle Treiber (1024) die von der Audio-Engine (1022) erfassten Audiodaten, die der ersten Sprache entsprechen, abfängt und die abgefangenen Audiodaten, die der ersten Sprache entsprechen, an das Relaisverarbeitungsmodul (104) überträgt.

## Revendications

1. Système électronique (1) comprenant:
un hôte (10), comprenant:
un module de traitement audio (102) pour acquérir des données audio correspondant à une première langue à partir de flux audio traités par un programme d'application (100) exécuté sur l'hôte (10), dans lequel le programme d'application (100) exécuté sur l'hôte (10) comprend un logiciel de jeu spécifique;
un module de traitement de relais (104) pour recevoir les données audio correspondant à la première langue du module de traitement audio (102);
un moteur d'interprétation intelligent (106) pour recevoir les données audio correspondant à la première langue du module de traitement de relais (104) et convertir les données audio correspondant à la première langue en données textuelles correspondant à la première langue, et convertir les données textuelles correspondant à la première langue en données textuelles correspondant à une deuxième langue selon le logiciel de jeu exécuté sur l'hôte (10), le moteur d'interprétation intelligent (106) comprenant:
un module de traitement du langage naturel (1066) pour convertir les données textuelles correspondant à la première langue en données textuelles de glossaire correspondant à la première langue selon le logiciel de jeu exécuté par l'hôte (10);
une base de données textuelles (1072) comprenant une pluralité d'échantillons de texte correspondant à la première langue et une pluralité de logiciels de jeu, et une pluralité de textes de glossaire correspondant aux échantillons de texte, dans laquelle le module de traitement du langage naturel (1066) interroge la base de données textuelles (1072) pour déterminer les données de texte de glossaire correspondant à la première langue en fonction du logiciel de jeu exécuté dans l'hôte (10) et des données textuelles correspondant à la première langue; et
un traducteur (1068) pour convertir les données textuelles de glossaire correspondant à la première langue en données textuelles correspondant à la deuxième langue, dans lequel le moteur d'interprétation intelligent (106) transmet les données textuelles correspondant à la deuxième langue au module de traitement de relais (104); et
un pilote (108) pour convertir les données audio correspondant à la première langue en un signal vocal analogique correspondant à la première langue;
un dispositif de sortie audio (20) pour diffuser le signal vocal analogique correspondant à la première langue; et
un écran (40) pour recevoir les données textuelles correspondant à la deuxième langue du module de traitement de relais (104) et afficher les données textuelles correspondant à la deuxième langue.

2. Système électronique (1) de la revendication 1, dans lequel le module de traitement audio (102) comprend:
un moteur audio (1022) pour acquérir les données audio correspondant à la première langue à partir des flux audio traités par le logiciel de jeu exécuté sur l'hôte (10) et transmettre les données audio correspondant à la première langue au module de traitement de relais (104).

3. Système électronique (1) de la revendication 1 ou 2, dans lequel le module de traitement audio (102) comprend:
un moteur audio (1022) pour acquérir les données audio correspondant à la première langue à partir des flux audio traités par le logiciel de jeu exécuté sur l'hôte (10); et
un pilote virtuel (1024) pour intercepter les données audio acquises par le moteur audio (1022) et correspondant à la première langue et transmettre les données audio interceptées correspondant à la première langue au module de traitement de relais (104).

4. Procédé de traitement multimédia pour un système électronique (1), le système électronique (1) comprenant un hôte (10), l'hôte (10) comprenant un module de traitement audio (102), un module de traitement de relais (104), un moteur d'interprétation intelligent (106) et un pilote (108), le moteur d'interprétation intelligent (106) comprenant un module de traitement du langage naturel (1066), un traducteur (1068) et une base de données de texte (1072), le procédé de traitement multimédia comprenant les étapes suivantes:
utiliser le module de traitement audio (102) pour acquérir des données audio correspondant à une première langue à partir de flux audio traités par un programme d'application (100) exécuté sur l'hôte (10) et transmettre les données audio correspondant à la première langue au module de traitement de relais (104) et au pilote (108), dans lequel le programme d'application (100) exécuté sur l'hôte (10) comprend un logiciel de jeu spécifique;
utiliser le module de traitement de relais (104) pour transmettre les données audio correspondant à la première langue au moteur d'interprétation intelligent (106);
utiliser le moteur d'interprétation intelligent (106) pour convertir les données audio correspondant à la première langue en données textuelles de la première langue;
utiliser le module de traitement du langage naturel (1066) pour convertir les données textuelles correspondant à la première langue en données textuelles de glossaire correspondant à la première langue selon le logiciel de jeu exécuté par l'hôte (10), dans lequel la base de données textuelles (1072) comprend une pluralité d'échantillons de texte correspondant à la première langue et une pluralité de programmes d'application, et une pluralité de textes de glossaire correspondant aux échantillons de texte, le module de traitement du langage naturel (1066) interrogeant la base de données de texte (1072) pour déterminer les données de texte de glossaire correspondant à la première langue en fonction du logiciel de jeu exécuté dans l'hôte (10) et des données de texte correspondant à la première langue;
utiliser le traducteur (1068) pour convertir les données textuelles de glossaire correspondant à la première langue en données textuelles correspondant à la deuxième langue;
utiliser le moteur d'interprétation intelligent (106) pour transmettre les données textuelles correspondant à la deuxième langue au module de traitement de relais (104); utiliser le module de traitement de relais (104) pour transmettre les données textuelles correspondant à la deuxième langue à un écran (40) du système électronique (1) pour affichage; et
utiliser le pilote (108) pour convertir les données audio correspondant à la première langue en un signal vocal analogique correspondant à la première langue et émettre le signal vocal analogique correspondant à la première langue vers un dispositif de sortie audio (20) du système électronique (1) pour la lecture.

5. Procédé de traitement multimédia de la revendication 4, dans lequel le module de traitement audio (102) comprend un moteur audio (1022), le moteur audio (1022) acquiert les données audio correspondant à la première langue à partir des flux audio traités par le logiciel de jeu exécuté sur l'hôte (10) et transmet les données audio correspondant à la première langue au module de traitement de relais (104).

6. Procédé de traitement multimédia de la revendication 4 ou 5, dans lequel le module de traitement audio (102) comprend un moteur audio (1022) et un pilote virtuel (1024), le moteur audio (1022) acquiert les données audio correspondant à la première langue à partir des flux audio traités par le logiciel de jeu exécuté sur l'hôte (10), et le pilote virtuel (1024) intercepte les données audio acquises par le moteur audio (1022) et correspondant à la première langue et transmet les données audio interceptées correspondant à la première langue au module de traitement de relais (104).
